Europäisches Patentamt

European Patent Office

Office européen des brevets

(11) Publication number: **0 093 890**
**B1**

(12) **EUROPEAN PATENT SPECIFICATION**

(45) Date of publication of patent specification: **01.07.87**

(21) Application number: **83103627.2**

(22) Date of filing: **14.04.83**

(51) Int. Cl.⁴: **G 01 N 21/88,** G 01 B 11/10

(54) **Apparatus for detecting the irregularities on the surface of a linear material.**

(30) Priority: **10.05.82 JP 78644/82**

(43) Date of publication of application:
**16.11.83 Bulletin 83/46**

(45) Publication of the grant of the patent:
**01.07.87 Bulletin 87/27**

(84) Designated Contracting States:
**BE CH DE FR GB IT LI NL SE**

(56) References cited:
**FR-A-2 389 099**
**US-A-4 007 992**

**PATENTS ABSTRACTS OF JAPAN, vol. 3, no. 156 (E-161), December 21, 1979, page 32 E 161**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Nitta, Etsuro c/o Osaka Works of Sumitomo**
**Electric Industries Ltd. 1-3, Shimaya 1-chome Konohana-ku Osaka-shi Osaka (JP)**
Inventor: **Komamizu, Takayuki c/o Osaka Works of Sumitomo**
**Electric Industries Ltd. 1-3, Shimaya 1-chome Konohana-ku Osaka-shi Osaka (JP)**

(74) Representative: **Glawe, Delfs, Moll & Partner Patentanwälte**
**Postfach 26 01 62 Liebherrstrasse 20**
**D-8000 München 26 (DE)**

Courier Press, Leamington Spa, England.

## Description

The present invention relates to an apparatus for detecting any irregularities of form on the surface of a moving continuous filamentary material such as a cable.

In the process for manufacturing a linear material such as power cable or communications cable, partial irregularities are sometimes formed on the surface of the material. It is necessary, therefore, to test the linear material for such irregularities over its full length. Various apparatus for detecting such irregularities has so far been used. An apparatus for optically measuring the outer diameter of a linear material is sometimes used to continuously detecting the irregularities on the surface of a linear material without making contact therewith. In the method of measurement by such an apparatus, either a light projector or a light receptor is oscillated to scan the surface of the material in a direction perpendicular to the direction in which the linear material travels and surface irregularities are detected by a change in the quantity of light admitted into the light receptor or a change in the length of time for which the light is admitted into it. This method is not satisfactorily reliable because irregularities are sometimes overlooked if the material to be tested travels at a high speed.

A prior art device is known from the Japanese patent application JP—A 54 136 888. In this device the projected image of the object is formed on a projection plate and the image light is focussed through a lens system and a slit of specific width into an electric transducter. Therefore, the measured amount of received light does not change due to vibrations of the object. However, the measured amount of light is dependent on the intensity of the light source, and therefore fluctuations of the light intensity can cause false indication of irregularities.

It is an object of the present invention to provide a detecting apparatus of the above mentioned kind which provides a more reliable indication of irregularities of the material and is not affected by variations of intensity of the light source.

In accordance with the present invention there is provided an apparatus for detecting any irregularities of form on the surface of a moving continuous filamentary material such as a cable, said apparatus comprising a light projector for projecting parallel light on said material and a light receptor means for receiving said light and the shadow of said material running between said light projector means and said light receptor means, and for converting the received amount of light into an electrical signal, and a signal processing means connected to said light receptor means for processing said electrical signal and on detection of an irregularity to produce an alarm signal, characterized in that

said light receptor means comprises a pair of photoelectric elements spaced along the path of movement of said material, the dimension of each of the photoelectric elements perpendicular to the direction of travel, of said material being longer than the width of the shadow of said material cast on said elements,

that said signal processing means comprises a differential amplifier connected to said photoelectric elements for determining any difference between the electrical signals from said photoelectric elements and generating the alarm signal in response to such difference.

Other objects and features of the present invention will become apparent from the following description taken with reference to the accompanying drawings, in which:

Fig. 1 is a schematic side view of the apparatus according to this invention, and

Fig. 2 is a front view of the photoelectric conversion elements.

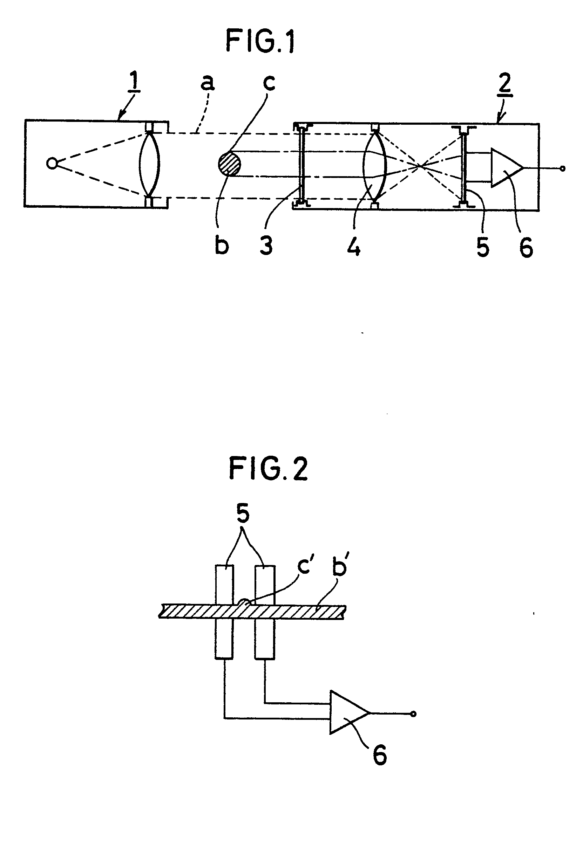

Referring to Fig. 1, the apparatus includes a light projector 1 adapted to emit a parallel light $a$ and a light receptor 2 opposed to the light projector. A linear material $b$ to be tested travels therebetween in a direction perpendicular to the parallel light $a$. A transmissive screen 3 is provided on the front of the light receptor 2. A lens 4 and a pair of photoelectric conversion elements 5 are provided behind the screen 3. The shadow $b'$ of the linear material $b$ is cast on the screen 3 and focussed by the lens 4 on the surfaces of the photoelectric conversion elements 5.

As shown in Fig. 2, the photoelectric conversion elements 5 are longer than the width of the shadow $b'$ of the linear material. They are arranged with a space therebetween on a line parallel to the path of said material. Their longitudinal edges are perpendicular to the direction in which the linear material travels. The elements 5 are so long that even if the linear material $b$ oscillates up and down, the shadow $b'$ will not get off the two photoelectric conversion elements disposed in parallel with each other. The output terminals of these elements 5 are connected to the input terminals of a differential amplifier 6.

The screen 3 and the lens 4 may be omitted from the light receptor 2. The parallel light $a$ and the shadow $b'$ of the linear material may be directly cast on the photoelectric conversion elements 5. A plurality of detectors may be provided around the linear material $b$ if it is required to detect surface irregularities over its whole periphery.

If a projection $c$ exists on the surface of the linear material $b$, the shadow $c'$ of the irregularity is cast on the photoelectric conversion elements 5. This causes a difference between the area of the shadow of the linear material which is cast on one element 5 and that which is cast on the other element 5. This causes a difference between the electrical output of one element and that of the other element. This difference in the output is amplified by the differential amplifier 6 and given to an alarm. An observer is notified by the alarm if the output of the differential amplifier 6 exceeds a predetermined level.

Any irregularities on the surface of a running linear material can be continuously detected because a pair of photoelectric conversion elements are disposed with a space left therebetween, perpendicular to the direction in which the linear material travels. If there is an irregularity on the surface of the linear material, it is detected in terms of a difference in the electrical output. The apparatus in accordance with the present invention is not affected by vibration if the photoelectric conversion elements have such a sufficient length that, even if the linear material oscillates up and down, the shadow thereof will not get off the photoelectric conversion elements. Because the signal outputs of the photoelectric conversion elements have no relation to the diameter of the linear material, the apparatus in accordance with the present invention need not be adjusted even if the diameter of the linear material has changed. Also, the apparatus in accordance with the present invention is not affected by a change in the speed at which the linear material travels.

## Claims

1. Apparatus for detecting irregularities of form (c) on the surface of a moving continuous filamentary material (b) such as a cable, said apparatus comprising a light projector means (1) for projecting parallel light (a) on said material, a light receptor means (2) for receiving said light and the shadow of said material running between said light projector means and said light receptor means and for converting the received amount of light into an electrical signal, and a signal processing means connected to said light receptor means for processing said electrical signal and on detection of an irregularity to produce an alarm signal, characterized in that

said light receptor means comprises a pair of photoelectric elements (5) spaced along the path of movement of said material, the dimension of each of the photoelectric elements perpendicular to the direction of travel, of said material being longer than the width of the shadow (b', c') of said material cast on said elements,

that said signal processing means comprises a differential amplifier (6) connected to said photoelectric elements for determining any difference between the electrical signals from said photoelectric elements (5) and generating the alarm signal in response to such difference.

2. Apparatus as claimed in claim 1, characterized in that

said light receptor means (2) further includes a screen (3) arranged between said filamentary material (b) and said photoelectric elements (5) and a lens (4) arranged between said screen (3) and said photoelectric elements (5), so that after passing through said lens (3), the shadow (b', c') of said material (b, c) will be cast on said photoelectric elements (5).

## Patentansprüche

1. Apparat zur Detektion von Oberflächenunregelmäßigkeiten (c) auf einem strangförmigen Material (b), wie z.B. einem Kabel, mit einer Lichtprojektionsvorrichtung (1), die paralleles Licht (a) auf das Material projiziert, einer Lichtrezeptorvorrichtung (2) zum Empfangen des Lichtes und des Schattens des Materials, welches zwischen der Lichtprojektorvorrichtung und der Lichtrezeptorvorrichtung hindurchläuft und zum Konvertieren der empfangenen Lichtmenge in ein elektrisches Signal, und mit einer Signalverarbeitungsvorrichtung, die mit der Lichtrezeptorvorrichtung verbunden ist, zum Verarbeiten des elektrischen Signals und zum Erzeugen eines Alarmsignals beim Feststellen einer Unregelmäßigkeit, dadurch gekennzeichnet, daß die Lichtrezeptorvorrichtung ein Paar von photoelektrischen Elementen (5) aufweist, die entlang des Bewegungsweges des Materials voneinander beabstandet sind, wobei die Ausdehnung jedes der photoelektrischen Elemente senkrecht zur Vorschubrichtung des Materials größer ist als die Breite des Schattens (b', c') des Materials, der auf die Elemente geworfen wird, und daß die Signalverarbeitungsvorrichtung einen Differentialverstärker (6) aufweist, der mit den photoelektrischen Elementen verbunden ist zum Bestimmen jeglichen Unterschiedes zwischen den elektrischen Signalen von den photoelektrischen Elementen (5) und zum Erzeugen eines Alarmsignals in Antwort auf einen solchen Unterschied.

2. Apparat nach Anspruch 1, dadurch gekennzeichnet, daß die Lichtrezeptorvorrichtung (2) ferner einen Schirm (3) aufweist, der zwischen dem strangförmigen Material (b) und den photoelektrischen Elementen (5) angeordnet ist, und eine Linse (4), die zwischen dem Schirm (3) und den photoelektrischen Elementen (5) angeordnet ist, so daß der Schatten (b', c') des Materials (b, c) nach dem Passieren durch die Linse (3) auf die photoelektrischen Elemente (5) geworfen wird.

## Revendications

1. Appareil pour la détection d'irrégularités de forme (c) sur la surface d'un matériau filiforme continu (b) en déplacement, tel qu'un câble, ledit appareil comprenant des moyens de projection de lumière (1) pour projeter une lumière parallèle (a) sur ledit matériau, des moyens de réception de lumière (2) pour recevoir ladite lumière et l'ombre dudit matériau en déplacement entre lesdits moyens de projection de lumière et lesdits moyens de réception de lumière et pour convertir la quantité de lumière reçue en un signal électrique, et des moyens de traitement de signal reliées auxdits moyens de réception de lumière pour traiter ledit signal électrique et fournir un signal d'alarme lors de la détection d'une irrégularité, caractérisé en ce que lesdits moyens de réception de lumière comprennent deux éléments photoélectriques (5) espacés le long du chemin de déplacement dudit matériau, la dimension de chacun des éléments photoélectriques qui est perpendiculaire à la direction de déplacement du matériau étant supérieure à la largeur de l'ombre (b', c') du matériau projetée sur lesdits éléments; et en ce que lesdits moyens de traitement de signal comprennent un amplificateur différentiel (6) connecté auxdits éléments photoélectriques pour déterminer toute différence entre les signaux électriques provenant de ces éléments photoélectriques (5) et engendrer le signal avertisseur en réponse à une telle différence.

2. Appareil suivant la revendication 1, caractérisé en ce que lesdits moyens de réception de lumière (2) comprennent en outre un écran (3), disposé entre ledit matériau filamentaire (b) et lesdits éléments photoélectriques (5), et une lentille (4) disposée entre ledit écran (3) et lesdits éléments photoélectriques (5) de sorte que, après passage à travers la lentille (3), l'ombre (b', c') dudit matériau (b, c) est projetée sur lesdits éléments photoélectriques (5).

# FIG.1

# FIG.2